# EUROPEAN PATENT SPECIFICATION

(11) **EP 2 566 939 B1**
(45) Date of publication and mention of the grant of the patent: **31.10.2018**
(21) Application number: 11777641.9
(22) Date of filing: 05.05.2011
(51) Int. Cl.: C10J 3/50, C10J 1/20, F23C 9/00, F23D 1/00, C10J 3/48

(54) **METHOD AND DEVICE FOR CARBON INJECTION AND RECIRCULATION OF SYNTHESIS GAS WHEN PRODUCING SYNTHESIS GAS**
VERFAHREN UND VORRICHTUNG FÜR KOHLENSTOFFEINSPRITZUNG UND SYNTHESEGAS-REZIRKULATION WÄHREND EINER SYNTHESEGASHERSTELLUNG
MÉTHODE ET DISPOSITIF D'INJECTION DE CARBONE ET DE RECIRCULATION D'UN GAZ DE SYNTHÈSE LORS DE LA PRODUCTION D'UN GAZ DE SYNTHÈSE

(30) Priority: 06.05.2010 SE 1000461
(43) Date of publication of application: 13.03.2013
(73) Proprietor: Cortus AB, 164 40 Kista (SE)
(72) Inventor: LJUNGGREN, Rolf, S-192 69 Sollentuna (SE)
(74) Representative: Ehrner & Delmar Patentbyrå AB
(86) International application number: PCT/SE2011/000079
(87) International publication number: WO 2011/139199

(56) References cited:
- EP-A2- 0 198 700
- WO-A1-03/091460
- WO-A1-2004/029511
- DE-A1- 4 025 909
- DE-U1- 20 001 421
- GB-A- 713 004
- US-A- 2 829 957
- US-A- 4 019 783
- US-A- 4 858 538
- US-A- 5 714 113
- US-B1- 6 558 614

## Description

### Technical field of the invention

This invention relates to a method and a device for carbon injection and recirculation of gases when producing synthesis gas from solid carbon particles, wherein the carbon particles are preferably obtained by pyrolysis and gasification of the carbon particles is effected by heating the carbon particles indirectly in the presence of a process gas in the same space in which the carbon particles are situated, the secondary reaction product being recirculated and the synthesis gas produced during the gasification being discharged from the said space. In order to achieve the best possible effect, the device includes a Laval nozzle for accelerating gases to supersonic speed and for creating negative pressure for the injection of powdered carbon and longer dwell times for gas and powdered carbon in the gasification reactor.

### State of the art

Devices for carbon injection when producing synthesis gas are required to allow for the gasification of carbon-bearing material in a gasification process.

Gasification is a process for producing gaseous fuel from solid fuel. The technique is used for coal, residual products of coal, petroleum residues, waste and biomass. The reactions are based on oxidising gases (e.g. CO₂ and H₂O) being heated by substoichiometric combustion and then reacting with carbon ([C] reducing agent), with carbon monoxide (CO) and hydrogen (H₂) being formed as heat is consumed in order to carry on the reactions, which are endothermic. The gaseous mixture of carbon monoxide (CO) and hydrogen (H₂) is usually referred to as synthesis gas.

One common gasification method is the highly substoichiometric combustion of carbon-bearing materials while supplying superheated steam. The combustion supplies the system with heat and flue gases (CO₂ and H₂O). Carbon which is not burnt but is now superheated reacts with flue gases and the steam supplied. The carbon (C) reduces carbon dioxide (CO₂) to carbon monoxide (CO) and water vapour (H₂O) to hydrogen (H₂). The heat consumed lowers the temperature and reactivity decreases. Carbon reactivity is highly temperature-dependent, while the equilibrium of the reactions is temperature-dependent. Oxygen-based combustion is currently the predominant combustion method in connection with gasification, although air-based combustion is also found. Most processes are based on a pressurised system. Steam and oxygen are easily pressurised and rarely cause problems. The introduction of, e.g. pulverulent material into the reactor means that a pressure difference between the atmosphere outside the gasification reactor and the pressure inside it has to be overcome.

The problem with the gasification of carbon-bearing materials such as coal, residual products of coal, petroleum residues, waste and biomass as described hereinabove consists in maintaining a sufficiently high temperature for a sufficiently long period of time to achieve the complete gasification of carbon-bearing material, effecting sufficient mixing of oxidising gases (CO₂ and H₂O) with the reducing agent (carbon) and overcoming pressure differences between the atmosphere outside and inside the gasification reactor. If the time and temperature cannot be maintained, the reaction will not be carried on to its completion, with insufficient mixing also leading to an incomplete reaction.

This invention is a device for carbon injection when producing synthesis gas which injects pulverulent material by means of a tubular injector, wherein the solid material goes into the centre thereof and a surrounding nozzle device of the Laval type for oxidising gases for creating a strong negative pressure which sucks the carbon into the injector and furthermore distributes it into the gasification reactor effects the increase in pressure, extends the dwell time in the reactor and creates a homogeneous mixture therein. The strong momentum of the oxidising gases brings about vigorous mixing of the synthesis gas in the gasification reactor with the incoming oxidising gases and the pulverulent material. The negative pressure created by the gas momentum can be controlled by recirculating some of the synthesis gas in the gasification reactor through the injector in channels provided to this end therein.

In US 6,558,614 B1 a method for producing a metal melt and corresponding multifunctional lance are previously known. However, the technical field of this document is different compared to the present invention. Also the recirculation of a secondary reaction product and means for doing so is not known from this document.

WO 2004/029511 relates to a combustion nozzle recirculating gas from the flame in order to reduce NOx.

### Aims and features of the invention

A first aim of this invention is to provide a device of the type defined in the introductory part, an essential principle of this invention being to create a negative pressure in order to facilitate the introduction of pulverulent material into the gasification reactor by means of the injector.

Another aim of this invention is to create vigorous agitation between the oxidising gases and the pulverulent material as they are introduced into the gasification reactor and to recirculate synthesis gas in the gasification reactor, thereby achieving uniformity of temperature and composition. This results in a longer dwell time in the reactor and thus allows for a more compact reactor design.

Yet another aim of this invention is to recirculate synthesis gas through the injector and to control the negative pressure as pulverulent material is introduced into the gasification reactor in this manner.

At least the first aim of this invention is achieved by means of a device having the features specified in independent claim 1 hereinafter. Preferred embodiments of the invention are defined in the dependent claims.

### Brief description of the drawings

One preferred embodiment of the invention will now be described with reference to the accompanying drawings, in which:
- Fig. 1: is an outline sketch of a device for carbon injection when producing synthesis gas according to this invention, the said outline sketch also showing units forming a device for carrying out the carbon injection in diagrammatic form, and
- Fig. 2: is an outline sketch of one embodiment of a device for carbon injection when producing synthesis gas according to this invention, the said outline sketch also showing units forming a device for carrying out the carbon injection in diagrammatic form.

### Detailed description of a preferred embodiment of the invention

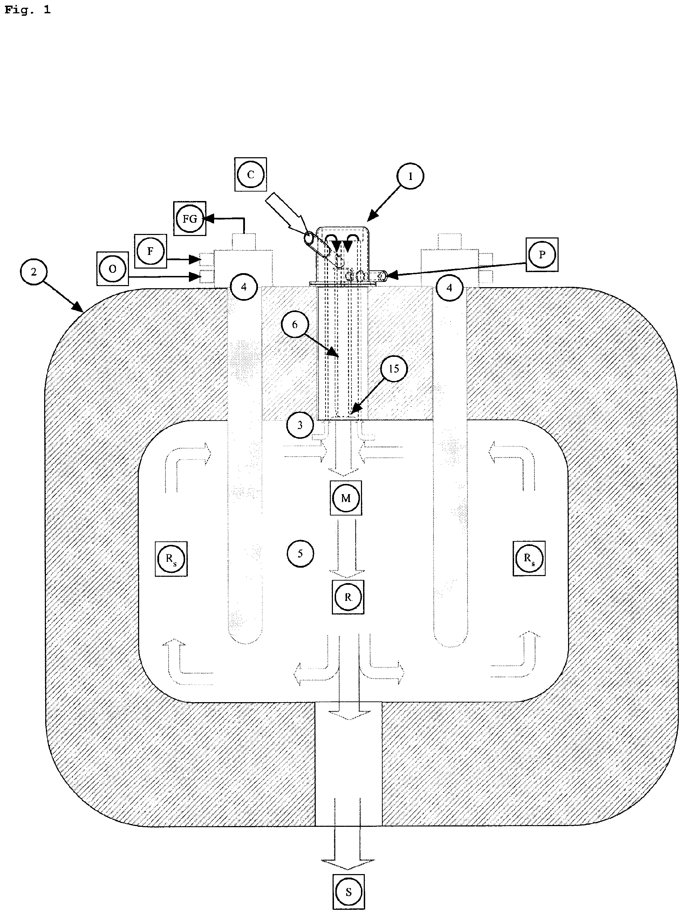

Fig. 1 is a diagram showing a device for carbon injection in a gasification process in which powdered carbon C is fed into an injection nozzle 1 which mixes the powdered carbon C with a process gas P (preferably steam) and a recirculated secondary reaction product Rₛ (synthesis gas). The mixture from the injection nozzle 1 is heated and reacts in an indirectly heated gasification reactor 2. To this end, the gasification reactor 2 includes burners 4 extending in a gasification space 5 in the gasification reactor 2, the burners 4 providing for indirect heating of the gasification reactor 2. The process gas P is pressurised and accelerates to supersonic speed (Mach > 1) through an annular Laval nozzle 15 incorporated into the injection nozzle 1. The Laval nozzle 15 creates a strong negative pressure in the centre of the injection nozzle 1, a central tube/central channel 6 for powdered carbon C and recirculated secondary reaction product Rₛ (synthesis gas) incorporated into the injection nozzle 1 opening into the gasification reactor 2.

The region in which the central tube 6 of the injection nozzle 1 opens into the gasification reactor 2 defines an inlet area for the powdered carbon C. The negative pressure in the centre of the injection nozzle 1/inlet area sucks out powdered carbon C and recirculated secondary reaction product Rₛ where the three streams are mixed and the gasification reaction starts. The process gas P flowing at supersonic speed through the annular Laval nozzle 15 also results in further recirculation from the periphery thereof. Further secondary reaction product is incorporated into the gasification mixture from the injection nozzle 1 in the centre of the mixing zone M immediately in front of the injection nozzle 1 itself. Heat from the secondary reaction product Rₛ helps the indirect radiant heat in the gasification reactor 2 to rapidly increase the temperature of the injected powdered carbon C and process gas P to reaction temperature for the gasification process.

The pipes, tubes, etc. connecting the units of the plant are not described nor shown in detail. The pipes, tubes, etc. are designed in a suitable manner to perform their function, i.e. to transport gases and solid substances between the units of the plant.

Fig. 1 shows the principles of an injection nozzle 1 connected to an indirectly heated gasification reactor 2, normally a ceramically lined reactor. The injection nozzle 1 has a Laval nozzle 15 for process gas P which accelerates the process gas P to supersonic speed. The annular Laval nozzle 15 is arranged on the outside of the central tube/central channel 6. The synthesis gas S in the process is produced primarily in the gasification reactor 2.

Solid carbon particles C are supplied to the injection nozzle 1 together with the process gas P and some of the recirculated secondary reaction product Rₛ. The negative pressure for the carbon injection can be controlled occasionally as a result of the fact that the secondary reaction product Rₛ flows through separate channels 14 in the injection nozzle 1. The carbon particles C preferably originate from pyrolysis preceding the gasification. The size of the carbon particles C is preferably adapted to give the fastest possible reaction in the reactor. The process gas P can be steam or recovered and purified flue gas from, e.g. the combustion phase heating the reactor. If the process gas P is recovered flue gas, it can contain both water vapour (H₂O) and carbon dioxide (CO₂). The process gas P is normally preheated by heat recovered from the outgoing synthesis gas S in a downstream heat exchanger. The process gas P normally has an excess pressure which is sufficiently high relative to the reactor pressure to achieve supersonic speed. The process gas P having a speed Mach > 1 creates strong momentum in the gasification reactor 2. The pressure for steam is dependent on the temperature out of the abovementioned heat exchanger. If flue gas is used instead of steam, the pressure of the recirculated flue gas is normally created by a compressor. The momentum of the process gas P out of the injection nozzle 1 results in the recirculation of secondary reaction product Rₛ entrained into the reaction zone R in the mixing zone M. The reaction taking place in the gasification reactor 2 is that the carbon C reduces the contents of the process gas P (H₂O and CO₂) to synthesis gas S (H₂ and CO), this reduction consuming the heat supplied to the process by burners 4 which heat indirectly. Heat is supplied to the gasification reaction by radiation from burners 4, with the combustion taking place inside radiant tubes in that fuel F and oxidising agent O are burnt to give flue gas FG, i.e. separated from the gasification flow. There is no direct gas yield in the gasification reactor 2 between burners 4 and process gas P or its reaction products. By imparting supersonic speed to the process gas P, the injection nozzle 1 provides for an extended dwell time in the reactor 2 and the gasification reaction can be carried on closer to equilibrium. This also results in the greatest possible degree of burn-out for the carbon particles C.

Outgoing synthesis gas S can be used as energy gas for combustion purposes or as the basis for further refinement to liquid fuels (Fischer-Tropsch process for typical vehicle fuels, methanol production or the like).

The injection nozzle 1 is designed to handle different system pressures in the gasification reactor 2. The pressure in 2 can be controlled from atmospheric pressure to very high pressure (> 100 bar). The injection nozzle 1 is typically designed with a ceramic part adapted to the ceramic lining in the gasification reactor 2 and an outer part made of heat-resistant steel, in which channels for carbon (C), process gas (P) and recirculated reaction product (Rₛ) are located and are ultimately brought together out of the lower end of the nozzle. The injection nozzle must always have a feed pressure for the process gas P higher than the system pressure in the gasification reactor 2. This pressure difference also creates the negative pressure which sucks out carbon particles C and entrains secondary reaction product Rₛ. The Laval nozzle 15 creates a strong negative pressure in relation to the mass flow of process gas P as the pressure is high compared to a standard injector with straight tubes. The strong negative pressure from the Laval nozzle 15 is advantageous for controlling the ratio between the mass flow of carbon C and the process gas P in the gasification reactor 2 and thereby for achieving optimum reaction conditions.

The choice of material for the injection nozzle 1 depends on the temperature in the gasification reactor 2, which in turn depends on the reaction temperature, to achieve the maximum yield of synthesis gas S. A typical value is in the range of 900-1300°C. The choice of material for ceramic and metal parts in the injection nozzle 1 is adapted to the selected temperature level. Temperature uniformity in the reaction zone R is achieved more rapidly than in the case of normal injection nozzles as a result of the recirculation of secondary reaction product Rₛ partly through the channels 3 in the injection nozzle 1 and partly through the mixing zone M.

The synthesis gas S (H₂ and CO) from the gasification reactor 2 contains hydrogen and carbon monoxide, as well as a certain amount of carbon dioxide and methane depending on the composition of the incoming process gas P and the selected temperature.

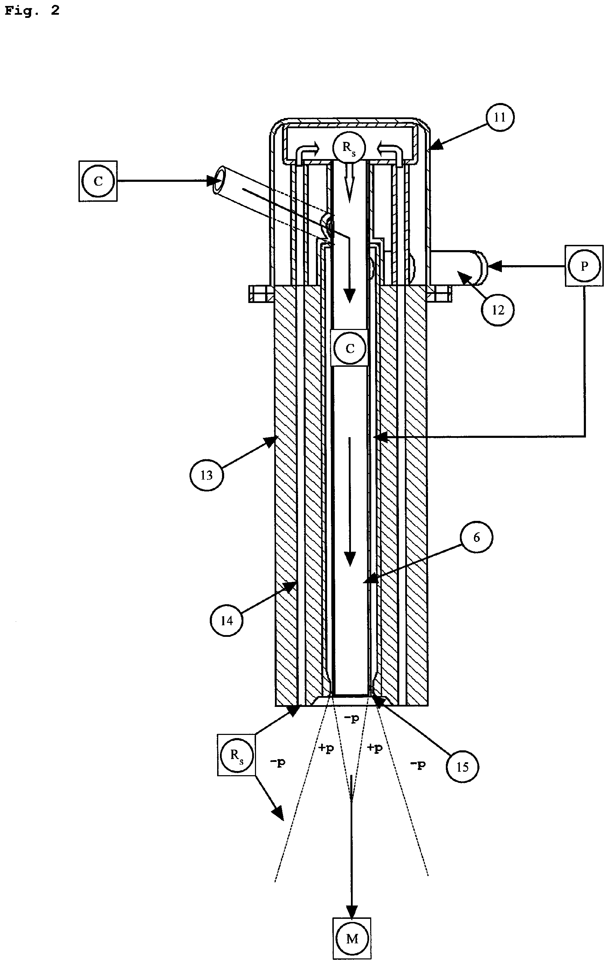

Figure 2 shows an embodiment of a device for carbon injection when producing synthesis gas. The injection nozzle 1 consists of a metal part 11 and a ceramic part 13 forming one unit. The injection nozzle has a Laval nozzle 15 for process gas P through which the pressurised gas accelerates to supersonic speed. Powdered carbon C is fed typically by means of a feed screw and a plug flow to the central tube/central channel 6 where the powder is mixed with recirculated secondary reaction product Rₛ sucked in through further channels 14. The process gas P (preferably steam) is fed through a connection 12 through a concentric tube down to the Laval nozzle 15 where the process gas (steam) at excess pressure is accelerated strongly to supersonic speed (Mach > 1) by the Laval nozzle 15 with expansion out of the nozzle (+p) and creates a negative pressure (-p) in the centre which entrains powdered carbon C and recirculated reaction product Rₛ into the mixing zone M where the periphery of the Laval nozzle 15 also creates a negative pressure (-p) and recirculates secondary reaction product Rₛ in the mixing zone M.

### Possible modifications of the invention

In an alternative embodiment, the injection nozzle can be used with a mixture of process gas as described hereinabove with the addition of oxygen, this significantly increasing the temperature in the mixing zone M and the reaction zone R.

In another alternative embodiment, the injection nozzle is horizontal, the carbon injection C then taking place in the horizontal plane or as close to the horizontal plane as the process will allow.

Feeding of the powdered carbon C can be effected by means of a hydraulic piston instead of a feed screw as described in Fig. 2 hereinabove. Yet another alternative is for the powdered carbon C to be fed via a fluidised channel with gastight transfer to a vertical tube in the injection nozzle by means of a lock feeder.

When a gastight carbon feed system subjected to negative pressure is used, the pressure-regulating channels 14 in Fig. 2 can also be minimised.

In the embodiment described hereinabove, a secondary reaction product Rₛ is recirculated via channels 14 arranged in the injection nozzle 1. As an alternative to this arrangement, the synthesis gas S discharged from the gasification reactor 2 can instead be recirculated in the central tube/central channel 6 of the injection nozzle 1. From a purely practical point of view, this is achieved by means of a recirculation pipe arranged external of the gasification reactor 2.

## Claims

1. Method of introducing powdered carbon (C) into a gasification reactor (2), wherein a process gas (P) supplied to the gasification reactor (2) is reduced to a synthesis gas (S) by the powdered carbon (C) and the powdered carbon (C) is introduced into the gasification reactor (2) via a nozzle (1), a negative pressure being generated in an inlet area for the powdered carbon (C) via a Laval nozzle (15) and the negative pressure being generated in that the process gas (P) passes through the Laval nozzle (15), **characterised in that** the process gas (P) expands in a gasification space (5) in the gasification reactor (2), and that a secondary reaction product (Rₛ) is sucked into the nozzle (1) and mixed with the powdered carbon (C) as the powdered carbon (C) is introduced into the gasification reactor (2).

2. Method according to claim 1, **characterised in that** the negative pressure generated in the inlet area sucks in gases and particles situated in the gasification reactor (2), thereby extending the dwell time of the gases and particles in the gasification reactor (2).

3. Method according to any one of claims 1-2, **characterised in that** the negative pressure generated in the inlet area results in the circulation of gases and particles in the gasification reactor (2), thereby compensating for concentration differences in the gas composition, compensating for temperature variations as a result of gasification reactions and minimising the stationary beds around burners (4) arranged in the gasification reactor (2) .

4. Device for introducing pulverulent material (C) into a gasification reactor (2), wherein a process gas (P) supplied to the gasification reactor (2) is reduced to a synthesis gas (S) by the pulverulent material (C), the device consists of an injection nozzle (1), the injection nozzle (1) is provided with a central tube/central channel (6) for introducing the pulverulent material (C) into the gasification reactor (2) and the injection nozzle (1) includes a Laval nozzle (15) arranged on the outside of the central tube (6), and that the central tube/central channel (6) opens directly into a gasification space (5) in the gasification reactor (2), **characterised in that** the injection nozzle (1) includes further channels (14) for the recirculation of a secondary reaction product (Rₛ) and that the further channels (14) communicate with the central tube/central channel (6) in the region of the end of the injection nozzle (1) directed away from the gasification space (5) in the gasification reactor (2).

5. Device according to claim 4, **characterised in that** the Laval nozzle (15) is arranged at the end of the injection nozzle (1) directed towards a gasification space (5) in the gasification reactor (2).

6. Device according to claim 4 or 5, **characterised in that** the cross-sectional dimensions of the further channels (14) can be varied, thereby adjusting the negative pressure created by the Laval nozzle (15).

## Patentansprüche

1. Verfahren zum Einbringen von pulverisiertem Kohlenstoff (C) in einen Vergasungsreaktor (2), wobei ein Prozessgas (P), welches dem Vergasungsreaktor (2) zugeführt wird, durch den pulverisierten Kohlenstoff (C) zu einem Synthesegas (S) reduziert wird, und der pulverisierte Kohlenstoff (C) über eine Düse (1) in den Vergasungsreaktor (2) eingebracht wird, wobei über eine Lavaldüse (15) in einem Einlassbereich für den pulverisierten Kohlenstoff (C) ein Unterdruck erzeugt wird, und der Unterdruck dadurch erzeugt wird, dass das Prozessgas (P) die Lavaldüse (15) passiert, **dadurch gekennzeichnet, dass** das Prozessgas (P) in einem Vergasungsraum (5) in dem Vergasungsreaktor (2) expandiert, und dass ein Sekundärreaktionsprodukt (Rₛ) in die Düse (1) gesaugt und mit dem pulverisierten Kohlenstoff (C) gemischt wird, wenn der pulverisierte Kohlenstoff (C) in den Vergasungsreaktor (2) eingebracht wird.

2. Verfahren nach Anspruch 1, **dadurch gekennzeichnet, dass** der in dem Einlassbereich erzeugte Unterdruck Gase und Partikel einsaugt, die sich in dem Vergasungsreaktor (2) befinden, wodurch die Verweilzeit der Gase und Partikel in dem Vergasungsreaktor (2) verlängert wird.

3. Verfahren nach einem der Ansprüche 1 bis 2, **dadurch gekennzeichnet, dass** der in dem Einlassbereich erzeugte Unterdruck zur Zirkulation von Gasen und Partikeln in dem Vergasungsreaktor (2) führt, wodurch Konzentrationsunterschiede in der Gaszusammensetzung ausgeglichen werden, Temperaturschwankungen infolge von Vergasungsreaktionen ausgeglichen werden und die stationären Betten um Brenner (4) herum, die in dem Vergasungsreaktor (2) angeordnet sind, minimiert werden.

4. Vorrichtung zum Einbringen von pulverförmigem Material (C) in einen Vergasungsreaktor (2), wobei ein Prozessgas (P), welches dem Vergasungsreaktor (2) zugeführt wird, durch das pulverförmige Material (C) zu einem Synthesegas (S) reduziert wird, wobei die Vorrichtung aus einer Injektionsdüse (1) besteht, die Injektionsdüse (1) mit einem zentralen Rohr/zentralen Kanal (6) zur Einbringung des pulverförmigen Materials (C) in den Vergasungsreaktor (2) ausgestattet ist, und die Injektionsdüse (1) eine Lavaldüse (15) einschließt, die auf der Außenseite des zentralen Rohrs (6) angeordnet ist, und dass das zentrale Rohr/der zentrale Kanal (6) sich direkt in einen Vergasungsraum (5) in dem Vergasungsreaktor (2) öffnet,
**dadurch gekennzeichnet, dass** die Injektionsdüse (1) weitere Kanäle (14) für die Rezirkulation eines Sekundärreaktionsprodukts (Rₛ) einschließt, und dass die weiteren Kanäle (14) mit dem zentralen Rohr/zentralen Kanal (6) in der Region am Ende der Injektionsdüse (1) kommunizieren, welches von dem Vergasungsraum (5) in dem Vergasungsreaktor (2) weg gerichtet ist.

5. Vorrichtung nach Anspruch 4, **dadurch gekennzeichnet, dass** die Lavaldüse (15) am Ende der Injektionsdüse (1) angeordnet ist, die auf einen Vergasungsraum (5) in dem Vergasungsreaktor (2) gerichtet ist.

6. Vorrichtung nach Anspruch 4 oder 5, **dadurch gekennzeichnet, dass** die Querschnittabmessungen der weiteren Kanäle (14) variiert werden können, wodurch der durch die Lavaldüse (15) erzeugte Unterdruck angepasst wird.

## Revendications

1. Procédé d'introduction de carbone en poudre (C) dans un réacteur de gazéification (2), dans lequel un gaz de procédé (P) délivré au réacteur de gazéification (2) est réduit en un gaz de synthèse (S) par le carbone en poudre (C) et le carbone en poudre (C) est introduit dans le réacteur de gazéification (2) par une buse (1), une pression négative étant générée dans une zone d'entrée pour le carbone en poudre (C) par le biais d'une buse de Laval (15) et la pression négative étant générée du fait que le gaz de procédé (P) passe à travers la buse de Laval (15), **caractérisé en ce que** le gaz de procédé (P) se détend dans un espace de gazéification (5) dans le réacteur de gazéification (2), et **en ce qu'**un produit de réaction secondaire (Rₛ) est aspiré dans la buse (1) et mélangé avec le carbone en poudre (C) lorsque le carbone en poudre (C) est introduit dans le réacteur de gazéification (2).

2. Procédé selon la revendication 1, **caractérisé en ce que** la pression négative générée dans la zone d'entrée aspire des gaz et particules situés dans le réacteur de gazéification (2), prolongeant ainsi le temps de maintien des gaz et particules dans le réacteur de gazéification (2).

3. Procédé selon l'une quelconque des revendications 1 et 2,
**caractérisé en ce que** la pression négative générée dans la zone d'entrée se solde par la circulation de gaz et particules dans le réacteur de gazéification (2), compensant ainsi des différences de concentration dans la composition du gaz, compensant des variations de température résultant de réactions de gazéification et minimisant les lits stationnaires autour de brûleurs (4) disposés dans le réacteur de gazéification (2).

4. Dispositif destiné à introduire un matériau pulvérulent (C) dans un réacteur de gazéification (2), dans lequel un gaz de procédé (P) délivré au réacteur de gazéification (2) est réduit en un gaz de synthèse (S) par le matériau pulvérulent (C), le dispositif consiste en une buse d'injection (1), la buse d'injection (1) est pourvue d'un tube central/canal central (6) servant à introduire le matériau pulvérulent (C) dans le réacteur de gazéification (2) et la buse d'injection (1) comporte une buse de Laval (15) disposée sur l'extérieur du tube central (6), et en ce que le tube central/canal central (6) s'ouvre directement dans un espace de gazéification (5) dans le réacteur de gazéification (2),
**caractérisé en ce que** la buse d'injection (1) comporte des canaux supplémentaires (14) pour la recirculation d'un produit de réaction secondaire (Rₛ) et **en ce que** les canaux supplémentaires (14) communiquent avec le tube central/canal central (6) dans la région de l'extrémité de la buse d'injection (1) dirigée à l'opposé de l'espace de gazéification (5) dans le réacteur de gazéification (2).

5. Dispositif selon la revendication 4, **caractérisé en ce que** la buse de Laval (15) est disposée à l'extrémité de la buse d'injection (1) dirigée vers un espace de gazéification (5) dans le réacteur de gazéification (2).

6. Dispositif selon la revendication 4 ou 5, **caractérisé en ce que** les dimensions en coupe transversale des canaux supplémentaires (14) peuvent être modifiées, réglant ainsi la pression négative créée par la buse de Laval (15).
